# EUROPEAN PATENT APPLICATION

(11) **EP 3 179 179 A1**
(43) Date of publication of application: **14.06.2017**
(21) Application number: 15199278.1
(22) Date of filing: 10.12.2015
(51) Int. Cl.: F24J 2/52, H02S 20/24, H02S 20/10

(54) **PHOTOVOLTAIC ASSEMBLY WITH INTEGRATED MOUNTING STRUCTURE AND METHOD OF MANUFACTURING THE SAME**

(71) Applicant: Flisom AG, 8155 Niederhasli (CH)
(72) Inventor: Stutterheim, Stephan, 8196 Wils (CH); Mulks, Annemarie, 8052 Zürich-Seebach (CH); Fischer, Diego, 2000 Neuchatel (CH)
(74) Representative: Gulde & Partner

(57) **Abstract**

A photovoltaic assembly with integrated mounting structure is disclosed, which comprises a back sheet (300) made of a single sheet and accommodating at least one solar module in a central portion (303) of the back sheet (300), wherein the back sheet (300) comprises a first lateral portion (301) and a second lateral portion (302) extending along two opposite sides of the central portion (303) and forming a predetermined angle with respect to the central portion, wherein the first and second lateral portions (301, 302) respectively comprise a first base portion (301 b) and a second base portion (302b) adapted to lay on a roof surface.

## Description

### BACKGROUND OF THE INVENTION

### 1. Field of the Invention

The present invention relates to a photovoltaic assembly (or solar module assembly) comprising a back sheet accommodating one or more arrays of photovoltaic cells and which is shaped into a mounting structure for fixing or positioning the assembly onto a roof and a method of manufacturing the photovoltaic assembly.

### 2. Description of Related Art

Solar modules are used to convert sunlight into electrical current. The solar modules are arranged on a supporting back sheet, for example a back sheet, and electrically connected to each other in a photovoltaic array. When the photovoltaic arrays are exposed to sunlight radiation, electricity is produced.

Flat and inclined roofs of residential, commercial and industrial buildings are widely used for photovoltaic application. Depending on the type or building, there may be restrictions on the weight the roof can bear. Therefore, a demand for low-weight solar modules arises.

A thin-film solar cell, also called a thin-film photovoltaic cell, is a type of solar cell that is made by depositing one or more thin layers on a supporting substrate. Thin-film solar cells including cadmium telluride (CdTe), copper indium gallium diselenide (CIGS), and amorphous and other thin-film silicon (a-Si, TF-Si) are commercially used in several solar cell technologies. Thin-film solar cells, such as Cu(In, Ga)Se₂ (CIGS) or CdTe-based solar cells, show a high potential for cheaper solar electricity, lower energy payback time, and improved life cycle impact as compared to traditional wafer based silicon photovoltaic cells. Furthermore, thin-film solar cells using thin, flexible supporting structures are not only less expensive to produce but also much lighter than conventional solar cells deposited on a glass substrate.

When the solar modules are arranged on a roof, they are usually attached to a mounting structure, which should fulfil the two main functions of mechanical fixation of the solar modules onto the roof and of tilting the solar modules so to optimize the sun exposure, to avoid dirt accumulation and to enhance self-cleaning by rain. Such a mounting structure is generally assembled from various components and is attached on the roof surface. The separated manufacturing of solar module and mounting structure as two individual products is state-of-the-art in today's photovoltaic power plants and makes the assembly at the installation site a complex one, requiring additional labour time resulting in additional costs.

Furthermore, said mounting structures, which have to ensure mechanical stability of the photovoltaic arrays and withstand large wind and snow loads, may make up a large part of the overall weight of the assembly, especially in the case of light thin-film solar cells. There is, therefore, a need for a more economical mounting solution of photovoltaic arrays on roofs that is faster to assemble, less complex in parts and installation, lighter in weight per square meter, and lighter per Watt installed photovoltaic power.

### SUMMARY OF THE INVENTION

The present invention is directed to a photovoltaic assembly (or solar module assembly) wherein the back sheet used for supporting and encapsulating the solar modules is configured to work as a mounting structure for fixing the assembly on a roof.

According to a first aspect of the present invention, a photovoltaic assembly comprises a back sheet and at least one sub-module located on the back sheet, wherein each sub-module comprises a plurality of solar cells arranged in arrays and connected to each other. The back sheet comprises a central portion, wherein the at least one sub-module is accommodated, a first lateral portion and a second lateral portion. The first lateral portion extends along a first side of the central portion and forms a predetermined angle with the central portion, and the second lateral portion extends along a second side of the central portion opposite to the first side and forms a predetermined angle with the central portion. The first lateral portion comprises a first base portion and the second lateral portion comprises a second base portion for mounting the photovoltaic assembly on a base.

The back sheet is formed as a single sheet.

Preferably, the back sheet has a rectangular shape. Preferably, the length of the back sheet ranges between 1 m and 20m.

Preferably, the back sheet is made of at least one of aluminium, aluminium alloy, steel, coated steel, coated steel alloy and steel alloy. Alternatively, the back sheet may be made of polymers, composites and combinations thereof. Preferably, the back sheet has a thickness ranging from 0.2mm to 5mm. More preferably, the thickness ranges between 0.6mm and 2mm.

The width of the first and second base portions may range between 0.01 m and 3m. Preferably, the width of the first and second base portions ranges between 0.04m and 1 m, even more preferably between 0.1 m and 0.5m.

The central portion of the back sheet may be adapted to be bent at a later stage so to form a tilt angle with respect to a plane parallel to the first and second base portions.

According to a preferred embodiment, the central portion of the back sheet may comprise a first central sub-portion and a second central sub-portion, each accommodating at least one sub-module and adjoining each other along a central line extending parallel to the first and second sides of the central portion. The back sheet may be adapted to be bent along the central line so that each of the first and second central sub-portions may form a tilt angle with respect to a plane parallel to the first and second base portions for optimizing the sun exposure of the photovoltaic assembly.

The tilt angle of each central sub-portion may vary between 5° and 60° against horizontal and it is chosen so to optimize the sun exposure, wind resistance, snow load, and the self-cleaning properties of the photovoltaic assembly.

Preferably, both first and second central sub-portions are equipped with a power optimizer circuit, each power optimizer circuit comprising a DC/DC converter. The two DC/DC converters may be connected in series or in parallel in order to result in a single pair of positive and negative connectors for the complete assembly. This reduces the effort of connecting the assemblies with each other and hence lowers the cost of installation.

Optionally, both first and second central sub-portions are equipped with a micro inverter. The micro inverters are integrated in the junction boxes or attached additionally to the junction boxes. The two micro inverters may be connected in series or in parallel in order to result in a single pair of connectors for the complete assembly. This reduces the effort of connecting the assemblies with each other and hence lowers the cost of installation.

Optionally, both first and second central sub-portions are equipped with a junction box. The two junction boxes may be connected in series or in parallel in order to result in a single pair of connectors for the complete assembly. This reduces the effort of connecting the assemblies with each other and hence lowers the cost of installation.

Preferably the assemblies are shaped in a way that they can be stockpiled one onto the other, enabling compact transporting and shipping.

Preferably, the first lateral portion comprises a first connection portion connecting the central portion to the first base portion and forming a first angle with respect to the central portion and a second angle with respect to the first base portion and the second lateral portion comprises a second connection portion connecting the central portion to the second base portion and forming a first angle with respect to the central portion and a second angle with respect to the second base portion.

Preferably, the second lateral portion comprises an edge portion extending along a side of the second base portion opposite to the side adjoining the second connection portion, wherein the edge portion is forming a predetermined angle with the second base portion.

Preferably, the angle β formed between the edge portion and the base portion is - equal to the angle γ formed between the connection portion and the base portion. Said angle may range between 10° and 90°. Preferably, said angle is about 45°.

Preferably, the back sheet comprises a plurality of upper holes along the central line. Preferably, the back sheet comprises a plurality of lower holes along the first and second connection portions.

Preferably, the sub-module mounted on the back sheet is a flexible solar sub-module.

According to another aspect of the invention, a method of manufacturing a photovoltaic assembly comprises: providing a back sheet comprising a central portion, a first lateral portion extending along a first side of the central portion and a second lateral portion extending along a second side of the central portion opposite to the first side; providing at least one sub-module on the central portion of the back sheet, the sub-module comprising a plurality of solar cells arranged in arrays and connected to each other; wherein the first and second lateral portions form a predetermined angle with the central portion, wherein the first lateral portion comprises a first base portion and the second lateral portion comprises a second base portion for mounting the photovoltaic assembly on a base.

Preferably, the method comprises bending the first and second lateral portions to form a predetermined angle with the central portion. Alternatively, the back sheet may be cast with first and second lateral portions forming a predetermined angle with the central portion.

Preferably, the method comprises laminating the at least one sub-module on the central portion of the back sheet. Preferably, the laminating process is performed before bending the first and second lateral portions.

Preferably, the step of laminating the at least one sub-module on the central portion of the back sheet comprises: placing a first layer of thermoplastic material on the central portion of the back sheet; placing a least one sub-module on the first layer of thermoplastic material; placing at least a second layer of thermoplastic material on the at least one sub-module; placing the central portion of the back sheet in a laminating device; and heating the central portion of the back sheet to a temperature above or equal to the melting temperature of the first and second layers of the thermoplastic materials. Preferably, the first and second lateral portions stick out of the laminating device during the lamination process.

Optionally, the step of laminating the at least one sub-module on the central portion of the back sheet comprises: placing a first layer of thermoplastic material on the central portion of the back sheet; placing a least one sub-module on the first layer of thermoplastic material; placing at least a second layer of thermoplastic material on the at least one sub-module; placing the central portion of the back sheet in a laminating device; and heating the multilayer sandwich to a temperature above or equal to the melting temperature of the first and second layers of the thermoplastic materials.

Preferably, the method further comprises punching a plurality of lower ventilation holes along a first connection portion connecting the central portion to the first base portion and forming a first angle with respect to the central portion and a second angle with respect to the first base portion and along a second connection portion connecting the central portion to the second base portion and forming a first angle with respect to the central portion and a second angle with respect to the second base portion.

Preferably, the method further comprises punching a plurality of upper ventilation holes along a central line of the central portion of the back sheet, the central line extending parallel to the first and second sides of the central portion. Preferably, the punching of the ventilation holes is performed before lamination.

In the photovoltaic assembly of the present invention the mounting structure, which is required for flat roof mounting, and the back sheet of the solar module are integrated in a single back sheet. The back sheet of a solar module serves as a protection against environmental influences (e.g. humidity) of the encapsulated solar cells, as carrier of the photovoltaic device and at the same time as a shaped mounting structure. This solution leads to fewer assembly steps for installing the mounting structure, fewer mounting system parts, simplified logistics for such a flat roof photovoltaic project, less mounting labor and reduced installation costs.

### BRIEF DESCRIPTION OF THE DRAWINGS

The accompanying drawings, together with the specification, illustrate exemplary embodiments of the present invention, and, together with the description, serve to explain the principles of the present invention.
- FIG. 1: shows a cross-sectional view of a portion of a sub-module retaining assembly according to an embodiment of the present invention.
- FIG. 2A-2F: show the manufacturing steps for fabricating a solar module assembly with integrated mounting structure according to an embodiment of the present invention.
- FIG. 3A-3B: show a solar module assembly with integrated mounting structure according to a first exemplary embodiment of the present invention.
- FIG. 4: shows a solar module assembly with integrated mounting structure according to a second exemplary embodiment of the present invention.
- FIG.5A-5B: show a solar module assembly with integrated mounting structure according to a further exemplary embodiment of the present invention.
- FIG. 6A-6B: show a solar module assembly with integrated mounting structure according to a further exemplary embodiment of the present invention.
- FIG. 7: shows a solar module assembly with integrated mounting structure and with metal support according to another exemplary embodiment of the present invention.
- FIG. 8: shows a solar module assembly with integrated mounting structure and with metal support according to yet another exemplary embodiment of the present invention.
- FIG. 9A-9B: shows an arrangement of solar module assemblies.
- FIG. 10: shows a cross sectional view of two neighbouring solar module assemblies.
- FIG. 11: shows a top view of a two-sided solar module assembly including junction boxes according to an embodiment of the present invention.

### DETAILED DESCRIPTION OF THE DRAWINGS

In the following detailed description, only certain exemplary embodiments of the present invention are shown and described, by way of illustration. As those skilled in the art would recognize, the invention may be embodied in many different forms and should not be construed as being limited to the embodiments set forth herein.

Thin-film solar cells are generally manufactured by depositing a plurality of thin-film layers on a substrate, wherein the deposited thin-film layers form patterns that are then electrically interconnected to each other by scribing process or by other connection means. Each of the deposited thin-film layers pattern forms a thin-film solar cell. A substrate that contains an array of interconnected thin-film solar cells is typically called a sub-module. The sub-modules generate a specific amount of electric power and are typically tiled into an array of interconnected sub-modules, which forms what is usually called a photovoltaic module.

A photovoltaic module (or solar module) is generally sized to deliver a desired amount of electrical power generated when the solar cells in the sub-modules forming the photovoltaic module are exposed to sunlight. A solar module may be rectangular in shape having a length and a width. Usually the supporting substrate for the sub-modules is made of glass, however other materials may be used, which are lighter and have lower production costs. For instance, the supporting substrate may be made of a thin, flexible material.

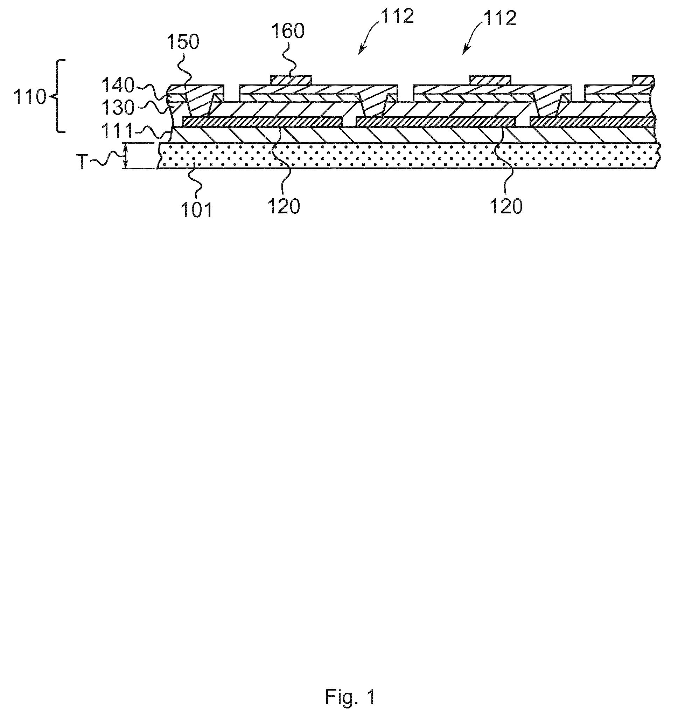

Figure 1 shows a cross-sectional view of a portion of a sub-module retaining assembly. Each sub-module 110 includes a plurality of solar cells 112 that are formed on a flexible substrate 111. The solar cells 112 may be a thin-film type solar cell that includes a plurality of thin-film layers, which are formed on the flexible substrate 111. The thin-film solar cell 112 may include an electrically conductive layer 120, an absorber layer 130, an optional buffer layer 140, a transparent conductive layer 150 and an optional front-contact metallized grid 160 which are all disposed on the flexible substrate 111.

The flexible substrate 111 may include a substrate material that does not allow for potassium to diffuse. The flexible substrate 111 may generally be formed from a flexible material, such as coated metal, plastic-coated metal, polymer material, plastic, coated plastic such as metal-coated plastic, or flexible glass. In the present example, the flexible substrate material is polyimide, which is flexible and will not degrade at the temperatures required to deposit one or more of the thin-film solar cell layers by a physical vapor deposition technique (e.g., vacuum evaporation). Polyimide substrate materials also require less processing than metal substrates to form a flexible sub-module, and exhibit thermal expansion coefficients that are compatible with those of material layers deposited on the substrate.

The electrically conductive layer 120, also known as the back-contact layer, may be formed from a variety of electrically conductive materials, preferably having a coefficient of thermal expansion (CTE) that is close to both the CTE of the flexible substrate 111 onto which it is deposited and to the CTE of other materials that are to be subsequently deposited upon it. The back-contact layer 120 preferably has a high optical reflectance and is commonly made of molybdenum (Mo), although several other thin-film materials such as metal chalcogenides, molybdenum chalcogenides, molybdenum selenides (such as MoSe₂), sodium-doped (Na-doped) Mo, potassium-doped (K-doped) Mo, Na and K-doped Mo, transition metal chalcogenides, tin-doped indium oxide (ITO), doped or non-doped indium oxides, doped or non-doped zinc oxides, zirconium nitrides, tin oxides, titanium nitrides, W, Ta, Au, Ag, Cu, and Nb may also be used or included advantageously.

The absorber layer 130 may be made of an ABC composition material, wherein A represents elements in group 11 of the periodic table, as defined by the International Union of Pure and Applied Chemistry (e.g., Cu or Ag), B represents elements in group 13 of the periodic table (e.g., In, Ga, or Al), and C represents elements in group 16 of the periodic table (e.g., S, Se, or Te). An example of an ABC₂ material is the Cu(In,Ga)Se₂ semiconductor also known as CIGS.

Optionally, the thin-film solar cell includes at least one semiconductive buffer layer 140 that is formed on the absorber layer 130. The buffer layer 140 typically has an energy bandgap higher than 1.5 eV, and is, for example, made of cadmium sulfide (CdS), cadmium sulfide hydroxides (Cd(S,OH)), cadmium zinc sulfides (CdZnS), indium sulfides, zinc sulfides, gallium selenides, indium selenides, compounds of (indium, gallium)-sulfur, compounds of (indium, gallium)-selenium, tin oxides, zinc oxides, Zn(Mg,0)S, Zn(0,S) material, or variations thereof.

The transparent conductive layer 150, also known as the front-contact layer, usually comprises a transparent conductive oxide (TCO) layer, for example made of doped or non-doped variations of materials such as indium oxides, tin oxides, or zinc oxides.

Optionally, front-contact metallized grid patterns 160 may cover part of transparent conductive layer 150 to advantageously augment front-contact conductivity. Also optionally, the thin-film solar module may be coated with at least one anti-reflective coating such as a thin material layer or an encapsulating film.

Sub-modules 110 may be formed on a flexible substrate material 111 configured as a web and transported within a roll-to-roll manufacturing system. The sub-modules may be then cut and removed from the web and arranged on a supporting back sheet along one or more rows comprising a plurality of sub-modules to form a solar module. For example, the sub-modules may be arranged in rows of 2 to 10 sub-modules, which are laminated onto the supporting back sheet 101. In a preferred embodiment, each row may comprise 3 to 6 sub-modules.

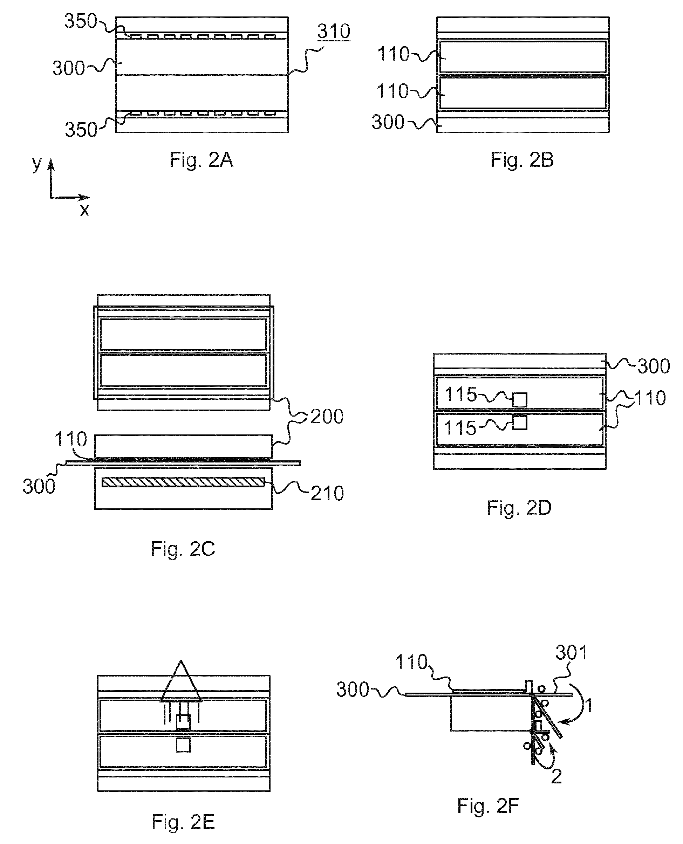

Figs. 2A through 2F show a method of fabricating a solar module assembly with integrated mounting structure according to an embodiment of the present invention.

In a first manufacturing step a metal sheet 300 having a rectangular shape is provided. The material used for the metal sheet 300 may be aluminium, steel, such as stainless steel, or a metal alloy. The metal sheet 300 has a rectangular shape having a length and a width, wherein the length may vary between 1 m and 20m. Holes, such as ventilation holes 350, are punched along a first lateral portion of the metal sheet 300 (from now on indicated as back sheet) and along a second lateral portion opposite to the first lateral portion, as shown in Fig. 2A. Optionally, holes may also be punched along a central line 310 of the back sheet 300, the central line 310 extending along a direction x parallel to the direction of the first and second lateral portions. In another step shown in Fig. 2B, a photovoltaic (PV) active area of the flexible substrate 111, i.e. the area of the flexible substrate on which the photovoltaic cells and sub-modules 110 and their internal electrical connections are formed, is placed onto the back sheet 300 with a first layer of thermoplastic adhesive material between the back sheet 300 and the sub-modules 110 and a second layer of thermoplastic adhesive material over the sub-modules 110. A transparent front sheet for encapsulating the sub-modules 110 is provided over the second layer of thermoplastic adhesive material. The above described assembly is then introduced in a laminating device, wherein the PV area and the back sheet 300 are laminated together. Said assembly may include further materials (not shown) such as bus bars, adhesive materials, barrier layers, front sheets, edge seals, release sheets, and/or other materials useful for lamination. Fig. 2C shows a laminating device 200 used for laminating the sub-modules 110 onto the supporting back sheet 300. A portion of the back sheet 300 on which the sub-modules 110 and the thermoplastic material layers have been arranged is placed in the laminating device 200, while peripheral portions of the back sheet 300, which do not comprise sub-modules 110, stick out of the laminating device 200. The laminating device 200 comprises one or more heating plates 201 for heating the assembly and melting the thermoplastic adhesive material while pressing the layers together in order to embed the cells between the first and second layers of thermoplastic adhesive material which adhere to the back and front sheets, respectively. Since the maximum length of one PV active area is calculated under consideration of different heat expansion behaviours of the front sheet and the back sheet, an elastic front sheet may be used having a thermal expansion coefficient similar to that of the metal back sheet.

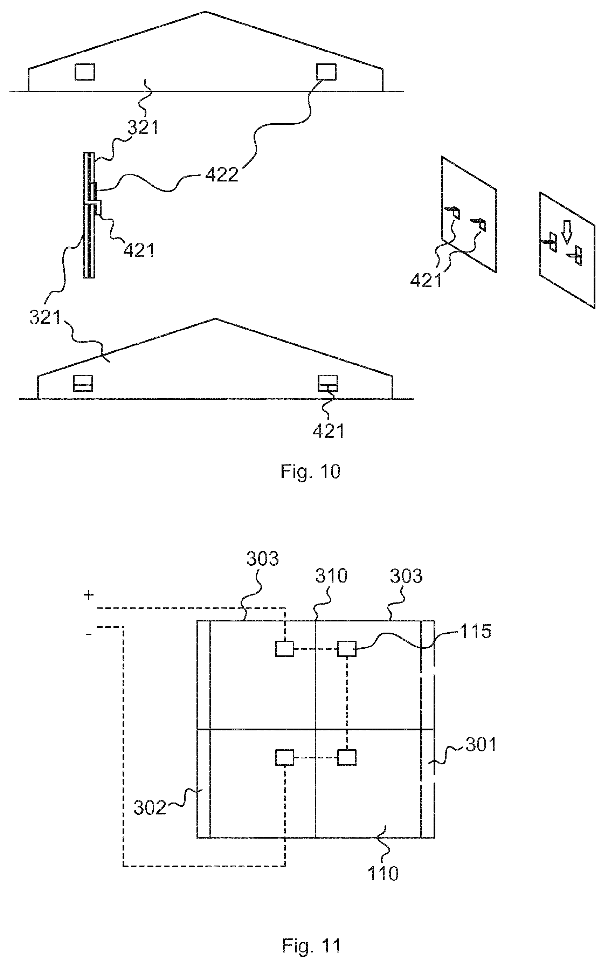

Fig. 2D shows the step of attaching one or more junction boxes 115 to at least one of the surfaces of the photovoltaic modules. For example, a junction box 115 may be attached to the back sheet 300 of the photovoltaic module, e.g. on a surface of the back sheet 300 that is not exposed to sunlight. The one or more junction boxes 115 may be located at any convenient location on one or more surfaces of the solar module. For example, junction boxes 115 may be located at a length-wise central location close to an edge of the solar module. Junction boxes 115 may also be located at length-wise extremities of the solar module, for example at a width-wise central location. Junction boxes 115 may also be located at one or more corners of the solar module. Optionally, one or more separate power optimizers and/or maximum power point trackers (not shown) may also be attached to or integrated within the photovoltaic module or integrated within each PV sub-module. Maximum power point trackers may improve the operation of separate modules or sub-modules over a broader range of illumination angles with respect to sunlight. Moreover, maximum power point trackers may improve the operation of separate modules or sub-modules subject to shading or partial shading. In the exemplary embodiment shown in Fig. 11, a solar module assembly comprises four solar modules 110 arranged along two rows of two solar modules 110 each. Each solar module 110 is connected to a junction box 115. The solar module assembly may have two cables that connect the assembly into a string formed of a first solar module and a second solar module. Each junction box 115 in the assembly may be equipped with a power optimizer circuit, each power optimizer circuit comprising a DC/DC converter. The two DC/DC converters may be connected in series or in parallel, in order to result in a single pair of positive and negative connectors for the whole assembly. In this way two differently orientated solar modules within the assembly may be independently optimized according to their electrical performance. Alternatively, each junction box 115 in the assembly may be equipped with a micro inverter.

After attaching the junction box 115, the assembly may be tested for wet leakage and electrical performance under standard test conditions (STC), as shown in Fig. 2E, in order to rate the efficiency of the PV device. Finally, Fig. 2F shows how the back sheet 300 may be bent, for example to form a fold along a line that is parallel to or passing through the line formed by punched holes 350 so that the lateral portions 301, 302 of the back sheet 300, which do not support any PV active element, are formed into the shape of a mounting structure. The lateral portions 301, 302 are bent to form an angle with respect to the PV active portion of the assembly, so that the lateral portions 301, 302 may be positioned in direct contact with the roof surface, wherein at least a part of the one or more lateral portions 301, 302 is configured to lay flat on the roof surface.

Although in the exemplary embodiment illustrated in Figs. 2A through 2F the back sheet is a flat metal sheet which is subsequently bent to form fist and second lateral portions, the present invention is not limited thereto and the metal sheet may also be made of polymer materials, composites and combination thereof. Furthermore, the back sheet may also be formed by casting the material in the desired form.

The photovoltaic cells forming the sub-module may have a right-angled orientation of the long side against the long side of the assembly. This allows optimized shadow behaviour of the assembly in a PV installation with east-west orientated PV areas and a dense surface coverage with assemblies, leading to partial row-to-row shadow in terms of electrical performance, as the shadow has in this way the tendency of first covering the short side of a single cell, before covering the long side.

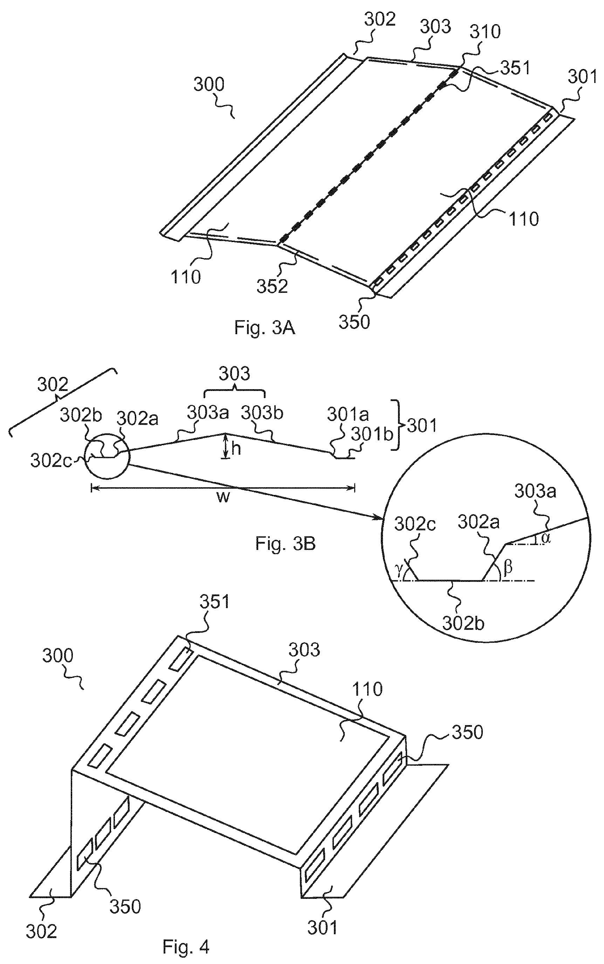

Fig. 3A shows a solar module assembly with integrated mounting structure as final product according to a first exemplary embodiment of the present invention and Fig. 3B shows a cross-sectional view of the solar module assembly of Fig. 3A.

The back sheet 300 is formed to have the profile depicted in Fig. 3B. When the solar module assembly is mounted on the roof, one can distinguish three different portions: a central portion 303, wherein the solar modules are accommodated, a first lateral portion 301 extending along a first side of the central portion 303, and a second lateral portion 302 extending along a second side of the central portion 303 which is opposite to the first side.

The first lateral portion 301 comprises a first connection portion 301 a and a first base portion 301 b. The second lateral portion 302 comprises a second connection portion 302a, a second base portion 302b and an edge portion 302c. The first and second base portions 301 b and 302b are adapted to lay flat on the substrate, e.g. on the roof, while the first and second connection portions 301 a and 302a connect the central portion 303 to the first and second base portions 301 b and 302b, respectively.

The first and second connection portions 301 a and 302a are tilted so to form a first angle with respect to the central portion 303 and a second angle with respect to the first and second base portions 301 b and 302b, respectively.

The back sheet 300 comprises a plurality of lower ventilation holes 350 along the first and second connection portions 301 a and 302a, and a plurality of upper ventilation holes 351 in the central portion 303 of the back sheet 300. Additionally, side ventilation holes 352 may be formed along a peripheral area of the central portions 303 along the short sides of the central portion 303, which are perpendicular to the long sides of the central portion 303 on which the first and second lateral portions 301 and 302 are attached.

The ventilation holes are designed so to produce a chimney effect that cools the assembly with cooler surrounding air thereby lowering its temperature. Moreover, the ventilation holes also function as drainage holes to allow fast water drainage.

Optionally, the heat conducting back sheet 300 can be partially shaped in the form of cooling ribs to increase heat exchange and convection from the hot metal back sheet to the surrounding air. Furthermore, the upper surface of the back sheet - i.e. the surface exposed to the sunlight - may be coated with a solar-reflective material or paint. A glue and an EVA (Ethylene-vinyl acetate) foil with optimized heat conductive properties may also be used between back sheet and PV active cells.

According to an aspect of the invention, the central portion 303 may be divided in a first central sub-portion 303a and a second central sub-portion 303b adjoined along a central line 310 extending along a direction x parallel to the first and second side of the central portion 303. Furthermore, the central line 310 may be pre-cut (perforated) so that it may be easily bent to form a tilt angle with respect to the first and second base portions 301b and 302b, i.e. with respect to the roof substrate on which the photovoltaic assembly is mounted. The tilt angle may vary between 5° and 60° and is determined depending on the exposure of the roof.

The height h of the assembly - i.e. the distance between the central line 310 and the roof surface - may be in the range between 0.1m and 2m. The width W of the assembly may range between 0.3m and 5m.

The width of the first and second base portions 301b and 302b may range between 0.01 m and 3m. Preferably, the width ranges between 0.04m and 1m, even more preferably between 0.1m and 0.5m. This range is determined by the row-to-row distance of one line of apparatuses to another one, which depends on the size of shadow cast by the inclined PV active area at a certain degree of inclination. The lower the inclination of the PV active area, the closer the apparatuses can be placed row- to-row and the smaller the width of the base portions can be selected, keeping in mind necessary space for ballasting or attachment with screws.

In the exemplary embodiment the first and second central sub-portions 303a and 303b have different orientations, for instance they may have an east-west orientation that guarantees high performance during the whole day. However, during hot days the temperature of the solar cells may increase, thus reducing the performance. In the present invention the two active areas in the assembly are connected through the back sheet 300, which is made of a heat conductive material. A further advantage produced by the single back sheet is that of lowering the temperature of the more exposed PV active area of the assembly. In fact, one of the first and second active sub-portions of the assembly will receive at a certain time of the day a higher solar radiation and will therefore reach a higher temperature than the other active sub-portion, leading to a heat difference in the heat conductive back sheet 300 and therefore to a thermal conduction from the hot side to the cold side. It follows that the assembly reaches an overall temperature which is lower than the temperature of the more exposed portion, thus increasing its power performance. Due to this effect, aluminium is a preferred material for the back sheet with a good cost to thermal conductivity ratio.

However, the present invention is not limited to embodiments designed for east-west orientation but also embodiments optimized for south orientation may be produced.

Fig. 4 shows a solar module assembly with integrated mounting structure adapted for a south orientation, wherein the PV active area is all oriented in one direction.

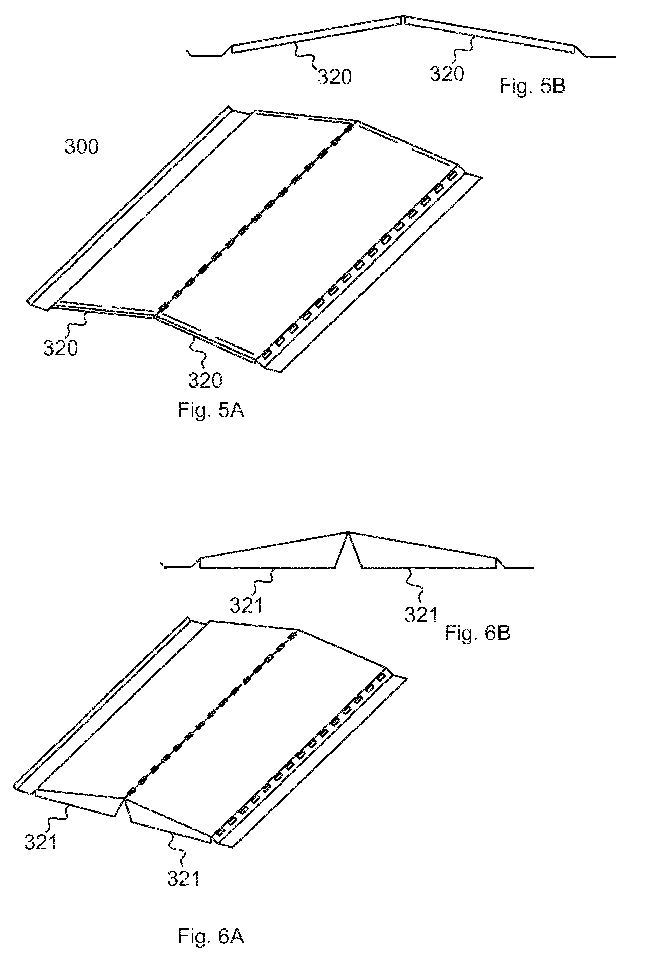

Fig. 5A shows a solar module assembly with integrated mounting structure adapted to be mounted with a east-west orientation according to a further exemplary embodiment of the present invention and Fig. 5B shows a cross-sectional view of the solar module assembly of Fig. 5A. The manufacturing of the solar module assembly of Fig. 5A corresponds to that of the solar module assembly described in Fig. 3A, therefore its description will be omitted. Additionally, the solar module assembly according to the embodiment of Fig. 5A comprises side folds 320 extending along short sides of the central portion 303 of the back sheet 300 in a downward direction, i.e., in the direction toward the base portions 301 b and 302b, wherein the short sides of the central portion 303 are perpendicular to the long sides of the central portion 303 on which the first and second lateral portions 301 and 302 are attached. The side folds 320 increase stability of the assembly and reinforce the load capacity of the central portion (e.g. to handle snow load requirement). Furthermore a side fold avoids that winds can enter below the structure and blow them off. Futhermore they can be made in a way, that they define the distance between two assemblies stacked for transport.

Fig. 6A shows a solar module assembly with integrated mounting structure adapted to be mounted with an east-west orientation according to a further exemplary embodiment of the present invention and Fig. 6B shows a cross-section view of the solar module assembly of Fig. 6A. According to the embodiment of Fig. 6A, the side folds 321 are formed to extend downward to the roof substrate and to be in contact with the roof substrate, once they are mounted. The lower side of the side folds 321 lies on the same plane as the base portions 301 b and 302b. Therefore, when the assembly is mounted, not only the first and second base portions 301 b and 302b on the long sides of the back sheet 300 are in contact with the roof surface, but also the side folds 321 extending from the short sides of the back sheet 300, thus increasing the stability of the assembly on the roof.

The photovoltaic assembly may be fixed on the roof by placing ballast material on the first and second base portions 301b and 302b, without perforation of the roof. However, screws may also be used to fix the assembly on the roof.

Additionally, a construction protection mat may be attached to the surfaces of the assembly which has contact to the roof surface at the factory site. The construction protection mat can be glued or bonded to the parts of the back sheet 300 in contact with the roof surface, i.e. to the first and second base portions 301 b and 302b. This way, a fast installation on site can be achieved, as no construction protection mat has to be cut and applied anymore.

The back sheet 300 is designed in a manner that the photovoltaic assemblies can be stacked on one another. The space required by the junction box 115, and other additional electronic components such as power optimizer or maximum power point tracker defines the distance between two stacked assemblies. The assemblies can be stacked on pallets and transported in stacks to the construction site, thus reducing the overall transport volume of the plurality of assemblies.

According to a further embodiment of the invention, the photovoltaic assembly maybe constructed with perforated bending lines, in such a manner that the bending of the central portion 303 at the desired tilt angle can be performed on the installation site by the installation staff with the help of a bending trestle. In particular, the central line 310 of the central portion 303 of the back sheet 300 may be perforated at the factory site to facilitate the bending at the installation site. In this way, the transportation of flat, or nearly flat, assemblies - the first and second lateral portions being already bent - further reduces the transport volume of the stacked devices.

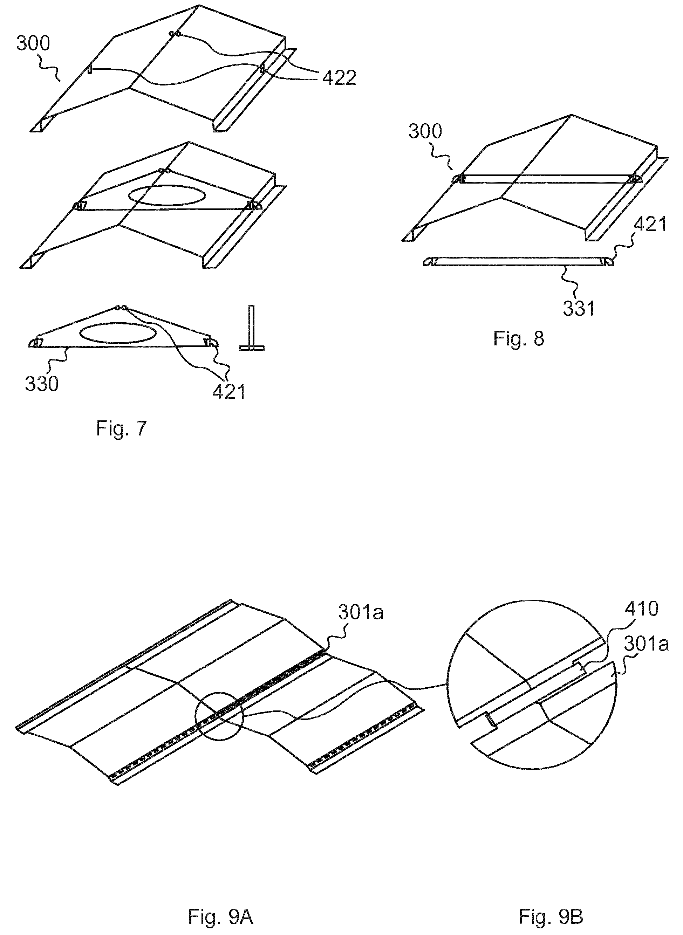

In order to improve the stability of a large back sheet, metal supports may be used. Fig. 7 and 8 show two different types of metal supports, which may be used to reinforce the assembly structure. The metal supports may be pluggable devices, which can be easily attached to the assembly by the installation staff. Fig. 7 shows a first type of metal support 330 having a triangular shape with a ventilation hole for air circulation and cable feed-through, while Fig. 8 shows a second type of metal support 331 having an elongated form. Both types of metal supports 330, 331 may be attached to the back sheet 300 by means of connection tongues 421 provided in the metal support, which are to be inserted in corresponding connection slits (or holes) 422 provided in the back sheet 300. In this way, the assembly stability can be guaranteed even with reduced back sheet thickness.

Cable throughputs and cable guiding holes in the apparatus may be protected with a rubber or plastic protection or feed-through. Cut or stamped cable holes may be improved by folded metal edges, thereby avoiding sharp edges that may cause cable chafing. Additionally, cable holders may prevent cables and connectors to lie in wet areas or on sharp edges and they may ensure distance between cables and hot metal areas.

Usually a plurality of photovoltaic assemblies is required to cover the roof surface. According to the present invention several photovoltaic assemblies may be mounted along the same direction and connected to each other. Fig. 9 shows an arrangement of photovoltaic assemblies aligned along a plurality of rows, wherein a clamp 410 is used for connecting neighbouring assemblies along a row.

Fig. 10 shows an alternative way of connecting neighbouring assemblies in a row by means of a folded out tongue 421, which can be put into a slit or hole 422 for fixture of two assemblies in a line.

When photovoltaic assemblies are arranged in a column direction, a first assembly will be mounted in such a way that the second base portion 302b of the first assembly overlaps the first base portion 301 b of a second assembly neighbouring with the first assembly along the column direction. The edge portion 302c extending from the second base portion 302b of the first assembly provides mechanical rigidity and stability and can be used for clamping together neighbouring assemblies. For instance, a row-to-row connector (not shown) may be attached in between two parallel orientated assemblies and used as support link.

The present invention discloses a back sheet for photovoltaic applications that carries one or multiple arrays of photovoltaic cells on the front side and is additionally shaped into a mounting structure for attachment on a roof surface and for fixing the various photovoltaic arrays attached on the back sheet into the desired orientation and inclination.

Since the mounting structure is integrated in the back sheet used for supporting and encapsulating the solar modules, the assembly is delivered to the final user ready to be installed and only limited montage at installation sites is needed. In fact, the number of components like screws, rails, sheets, and connectors is minimized as compared to conventional mounting systems and structural fixation of the assembly is realized through folding and bending of one large pre-cut metal sheet, which functions as back sheet. However, the invention in not limited thereto and the assembly may also be bent or cast - depending on the material - in its final form at the factory site. Therefore, the assembly can be described as an integrated plug-and-play system minimizing montage and installation time compared to traditional photovoltaic systems.

Furthermore, the photovoltaic assembly of the present invention has a reduced overall weight, which may vary between 1-10kg/m² depending on material and thickness of the back sheet. Therefore the present assembly is suitable to be mounted on building with weight-restricted roofs. Additionally, the use of a single back sheet for a plurality of photovoltaic active area improves the structural stability, thus enabling a reduction of the ballast weight.

Although a few embodiments of the present invention have been shown and described, it would be appreciated by those skilled in the art that changes may be made in these embodiments without departing from the scope of the invention as defined in the following claims and their equivalents.

### List of reference signs

- 110: sub-module
- 111: flexible substrate
- 112: photovoltaic cell
- 115: junction box
- 120: electrically conductive layer
- 130: absorber layer
- 140: buffer layer
- 150: transparent conductive layer
- 160: front-contact metallized grid
- 200: laminating device
- 201: heating plate
- 300: back sheet
- 301: first lateral portion
- 301a: first connection portion
- 301b: first base portion
- 302: second lateral portion
- 302a: second connection portion
- 302b: second base portion
- 302c: edge portion
- 303: central portion
- 303a: first central sub-portion
- 303b: second central sub-portion
- 310: central line
- 320, 321: side folds
- 330: triangular metal support
- 331: linear metal support
- 350: lower ventilation holes
- 351: upper ventilation holes
- 352: side ventilation holes
- 410: clamp
- 421: connection tongue
- 422: connection slit

## Claims

1. A photovoltaic assembly comprising:
a back sheet (300); and
at least one sub-module (110) located on the back sheet (300);
wherein each sub-module (110) comprises a plurality of solar cells (112) arranged in arrays and connected to each other; and
wherein the back sheet (300) comprises:
a central portion (303) accommodating the at least one sub-module (110);
a first lateral portion (301) extending along a first side of the central portion (303) and forming a predetermined angle with the central portion (303); and
a second lateral portion (302) extending along a second side of the central portion (303) opposite to the first side and forming a predetermined angle with the central portion (303);
wherein the first lateral portion (301) comprises a first base portion (301 b) and the second lateral portion (302) comprises a second base portion (302b) for mounting the photovoltaic assembly on a base.

2. The photovoltaic assembly of claim 1, wherein the back sheet (300) is made of at least one of aluminium, aluminium alloy, coated aluminium alloy, coated aluminium, coated steel, coated steel alloy, steel, steel alloy, polymers, composites and combinations thereof.

3. The photovoltaic assembly of one of the preceding claims, wherein the back sheet (300) has a thickness ranging from 0.2mm to 5mm.

4. The photovoltaic assembly of one of the preceding claims, wherein the central portion (303) of the back sheet (300) is adapted to be bent so to form a tilt angle with respect to a plane parallel to the first and second base portions (301 b, 302b) for optimizing the sun exposure of the photovoltaic assembly.

5. The photovoltaic assembly of one of claims 1-3,
wherein the central portion (303) of the back sheet (300) comprises a first central sub-portion (303a) and a second central sub-portion (303b), each accommodating at least one sub-module (110) and being adjoined to each other along a central line (310) extending parallel to the first and second sides of the central portion (303), and
wherein the back sheet (300) is adapted to be bent along the central line (310) so that each of the first and second central sub-portions (303a, 303b) forms a tilt angle with respect to a plane parallel to the first and second base portions (301 b, 302b) for optimizing the sun exposure of the photovoltaic assembly.

6. The photovoltaic assembly of claim 5, wherein the back sheet (300) comprises a plurality of upper holes (351) along the central line (310).

7. The photovoltaic assembly of one of the preceding claims,
wherein the first lateral portion (301) comprises a first connection portion (301 a) connecting the central portion (303) to the first base portion (301b) and forming a first predetermined angle with respect to the central portion (303) and a second predetermined angle with respect to the first base portion (301 b) and the second lateral portion (302) comprises a second connection portion (302a) connecting the central portion (303) to the second base portion (302b) and forming a first predetermined angle with respect to the central portion (303) and a second predetermined angle with respect to the second base portion (302b).

8. The photovoltaic assembly of claim 7,
wherein the second lateral portion (302) further comprises an edge portion (302c) extending along a side of the second base portion (302b) opposite to the side adjoining the second connection portion (302a), wherein the edge portion (302c) is forming a third predetermined angle with the second base portion (302b).

9. The photovoltaic assembly of one of the preceding claims, wherein the back sheet (300) comprises a plurality of lower holes (350) along the first and second connection portions (301 a, 302a).

10. The photovoltaic assembly of one of claims 5 through 9, wherein the back sheet (300) further comprises side folds (320, 321) extending along short sides of the central portion (303) of the back sheet 300 in a downward direction opposite to the surface of the central portion (303) accommodating the at least one sub-module (110).

11. The photovoltaic assembly of one of claims 5 through 9, further comprising a metal support (330, 331) for reinforcing the assembly.

12. The photovoltaic assembly of one of the preceding claims, wherein the sub-module (110) is a flexible solar sub-module.

13. A method of manufacturing a photovoltaic assembly, the method comprising:
providing a back sheet (300) comprising a central portion (303), a first lateral portion (301) extending along a first side of the central portion (303) and a second lateral portion (302) extending along a second side of the central portion (303) opposite to the first side;
providing at least one sub-module (110) on the central portion (303) of the back sheet (300), the sub-module (110) comprising a plurality of solar cells (112) arranged in arrays and connected to each other;
wherein the first and second lateral portions (301, 302) form a predetermined angle with the central portion (303); and
wherein the first lateral portion (301) comprises a first base portion (301 b) and the second lateral portion (302) comprises a second base portion (302b) for mounting the photovoltaic assembly on a roof substrate.

14. The method of claim 13, further comprising
laminating the at least one sub-module (110) on the central portion (303) of the back sheet (300).

15. The method of claim 14, wherein the step of laminating the at least one sub-module (110) on the central portion (303) of the back sheet (300) comprises:
providing a first layer of thermoplastic adhesive material on the central portion (303) of the back sheet (300);
placing the at least one sub-module (110) on the first layer of thermoplastic adhesive material;
providing a second layer of thermoplastic adhesive material on the at least one sub-module (110);
providing a transparent front sheet on the second layer of thermoplastic adhesive material;
placing the central portion (303) of the back sheet (300) in a laminating device (200); and
heating the central portion (303) of the back sheet (300) to a temperature above or equal to the melting temperature of the first and second layers of thermoplastic adhesive material.

16. The method of one of claims 14 and 15, further comprising
before laminating, punching a plurality of lower ventilation holes (350) along a first connection portion (301 a) connecting the central portion (303) to the first base portion (301 b) and being tilted with respect to both the central portion (303) and the first base portion (301 b) and along a second connection portion (302a) connecting the central portion (303) to the second base portion (302b) and being tilted with respect to both the central portion (303) and the second base portion (302b).

17. The method of one of claims 16, wherein the punching further comprises punching a plurality of upper ventilation holes (351) along a central line (310) of the central portion (303) of the back sheet (300), the central line (310) extending parallel to the first and second sides of the central portion (303).
